# EUROPÄISCHE PATENTSCHRIFT

(11) **EP 2 845 300 B1**
(45) Veröffentlichungstag und Bekanntmachung des Hinweises auf die Patenterteilung: **29.05.2019**
(21) Anmeldenummer: 13702399.0
(22) Anmeldetag: 24.01.2013
(51) Int. Cl.: H02K 15/095, H02K 3/32

(54) **VORRICHTUNG UND VERFAHREN ZUR BEWICKLUNG EINES ELEKTROMOTOR-BLECHPAKETS MIT EINER MAGNETSPULE**
APPARATUS AND METHOD FOR WINDING AN ELECTRIC-MOTOR LAMINATED CORE WITH A MAGNET COIL
DISPOSITIF ET PROCÉDÉ POUR ENROULER UNE BOBINE MAGNÉTIQUE AUTOUR D'UN PAQUET DE TÔLES DE MOTEUR ÉLECTRIQUE

(30) Priorität: 05.03.2012 DE 102012203377
(43) Veröffentlichungstag der Anmeldung: 11.03.2015
(73) Patentinhaber: Robert Bosch GmbH, 70442 Stuttgart (DE)
(72) Erfinder: BRIELMAIER, Wolfgang, 73765 Neuhausen (DE); SILBERER, Rainer, 71277 Rutesheim (DE); MUCSI, Gyoergy, 71254 Ditzingen (DE); HAGEDORN, Juergen, 32312 Lübbecke (DE); LOPES, Edmar, 70771 Leinfelden-Echterdingen (DE); WURSTER, Heiko, 70771 Leinfelden-Echterdingen (DE)
(86) Internationale Anmeldenummer: PCT/EP2013/051288
(87) Internationale Veröffentlichungsnummer: WO 2013/131679

(56) Entgegenhaltungen:
- WO-A2-99/66622

## Beschreibung

### Stand der Technik

Die Erfindung betrifft eine Vorrichtung und ein Verfahren zur Bewicklung eines Blechpakets mit einer Magnetspule für einen Elektromotor, bei der ein leitfähiger, isolierter Spulendraht in eine oder mehrere Nuten Polhornnuten einer Wicklungsoberfläche des Blechpakets einwickelbar ist, umfassend eine Halteeinrichtung zur Fixierung des zu bewickelnden Blechpakets während des Wickelvorgangs und eine Gegenhalteeinrichtung. Des Weiteren betrifft die Erfindung einen Elektromotor und eine Elektrowerkzeugmaschine, in der ein Elektromotor eingesetzt wird, bei dem ein Blechpaket mittels einer erfindungsgemäßen Vorrichtung bewickelt wurde.

Aus dem Stand der Technik ist beispielsweise bekannt, Elektromotoren, die vornehmlich in Elektrowerkzeugmaschinen, wie Winkelschleifer, Bohrmaschinen, Bohrhammer, eingesetzt werden, beispielsweise Reihen-, Neben- oder Doppelschluss-Motoren, deren Statoren geteilt sind, und die zusammengefügt werden können. Hierzu ist das Blechpaket des Stators, das die Magnetfeldlinien lenkt und als Träger der Statorspulen dient, zwei- oder mehrteilig aufgebaut. Somit kann jedes Blechpaketteil mit einer Magnetspule bewickelt werden, und beim Zusammenfügen der einzelnen Blechpakete wird ein halbzylinderförmiger Stator gebildet, in dessen Innendurchmesser auf sogenannten Polhörnern Magnetspulen aufgewickelt sind.

Zum Aufbringen der Magnetspulen auf das Blechpaket des Stators oder auch des Läufers, wird üblicherweise ein Nadelwickelverfahren oder ein Flyerwickelverfahren eingesetzt. Beim Nadelwickelverfahren wird ein geschlossener Stator oder ein Läuferpaket mit Hilfe einer oder zweier Wickelnadeln bewickelt. Ein derartiges Verfahren ist beispielsweise aus der WO 99/66622 A2 bekannt. Beim Flyerwickelverfahren wird mit Hilfe eines Flyers zunächst eine Spule auf eine entsprechend ausgelegte Wickelform gewickelt, wobei entweder der Flyerarm um das (feststehende) Blechpaket rotiert, oder das Blechpaket gegenüber einem feststehenden Flyerarm rotiert. Nach dem Wickeln wird die Spule mechanisch geformt und mit Hilfe eines Werkzeugs in die vorgesehenen Nutschlitze eines Stators eingeführt. Derartige Statoren sind der besseren Zugänglichkeit wegen in der Regel zwei- oder mehrteilig ausgeführt. Nach dem Wickelvorgang werden die Drahtenden mit Schrumpfschläuchen versehen und mit Crimpkontakten konfektioniert.

Für eine Massenfertigung ist es bekannt, die Magnetspule zunächst zu konfektionieren, und als Ganzes in die Polhörner eines Blechpaketes einzusetzen. Hierzu wird der isolierte Spulendraht zunächst auf eine "Magnetspulen-Halteeinrichtung" gewickelt, der Spule ein definiertes Maß vorgegeben, und anschließend in Polhornnuten des Stators eingesetzt bzw. eingehebelt.

Es ist Aufgabe der Erfindung, die aus dem Stand der Technik bekannte Fixierung eines während des Wickelvorgangs in eine Polhornnut eingelegten Isolierpapiers weiter zu verbessern.

### Offenbarung der Erfindung

Die Erfindung geht aus von einer Vorrichtung zur Bewicklung eines Blechpakets mit einer Magnetspule für einen Elektromotor, insbesondere zur Fixierung eines mit einer Magnetspule zu bewickelnden Blechpakets, bei der ein leitfähiger, isolierter Spulendraht in eine oder mehrere Polhornnuten einer Wicklungsoberfläche des Blechpakets einwickelbar ist. Die Vorrichtung umfasst eine Halteeinrichtung zur Fixierung des zu bewickelnden Blechpakets während des Wickelvorgangs und eine Gegenhalteeinrichtung.

Es wird vorgeschlagen, dass an der Halteeinrichtung an einer einem Polhorn des Bleckpakets abgewandten Seite einer Polhornnut zumindest ein erstes Klemmelement und an der Gegenhalteeinrichtung an einer dem Polhorn des Bleckpakets zugewandten Seite der Polhornnut zumindest ein zweites Klemmelement zur Fixierung eines Isolierpapies an der Polhornnut vorgesehen ist.

Mit Vorteil! wird das Isolierpapier derart festgeklemmt, dass es sich bei dem anschließenden Bewicklungsvorgang nicht mehr bewegen und auch nicht beschädigt werden kann. Auf diese Weise kann eine dauerhafte Isolation zwischen Magnetspule und Statorblechpaket nach dem Fertigungsvorgang erreicht werden. Dadurch, dass das zumindest eine erste Klemmelement auf der dem Polhorn abgewandten Seite und das zumindest eine zweite Klemmelement auf der dem Polhorn zugewanchten Seite vorgesehen ist, kann eine besonders einfache und leicht zu automatisierende Bewegungskurve der Klemmelemente erreicht werden. Mit dieser Anordnung von Klemmelementen kann das Isolierpapier während des gesamten Wicklungsvorgangs fest fixiert werden, ohne dass zusätzliche Nuten zur Fixierung des Isolierpapiers in der Vorrichtung vorgesehen werden müssen. Ein besonderer Vorteil dieser erfindungsgemäßen Ausgestaltung besteht darin, dass der gesamte Prozess des Einlegens des Blechpakets in die Wickelvorrichtung und Durchführung des Bewicklungsvorgangs automatisiert ablaufen kann und das Isolierpapier nicht händisch in eventuelle Nuten eingelegt und fixiert werden muss. Damit lässt sich die Qualität der Teile bei einer automatisierten Fertigung verbessern.

Vorteilhaft kann die Magnetspule unmittelbar und mit optimaler Formgebung in einem Blechpaket eines Stators oder Läufers gewickelt werden, so dass nachträgliche mechanische Veränderungen und/oder Beschädigungen von Isolierpapier und Magnetspule beim Einbau der Magnetspule vermieden und die Qualität der Magnetspule sowie des Elektromotors optimiert werden können. Insbesondere eignet sich die Vorrichtung zum direkten Bewickeln von Statoren bzw. Statorhälften, bei denen einzelne Drähte höher als die Polhornspitze stehen.

Mit der Bewicklungsvorrichtung kann ein direktes Bewickeln des Blechpakets durchgeführt werden, wobei das Blechpaket in eine Halteeinrichtung eingespannt oder eingelegt wird, und mittels einer Gegenhalteeinrichtung, die eine im Wesentlichen formkomplementäre Wicklungsunterstützungsoberfläche aufweist, und die gegenüber dem aus der Polhornnut herausragenden Bereich der Wicklungsoberfläche des Blechpakets derart verfahr- oder verschwenkbar ist, dass ein Wicklungsspalt ausgebildet werden kann, in den ein Spulendraht eingewickelt werden kann, so dass ein unmittelbares Bewickeln des Spulendrahtes in die Polhornnuten des Blechpakets zur Ausbildung einer Magnetspule durchführbar ist. Zuvor kann beispielsweise isolierpapier, das zur elektrischen Isolation zwischen Blechpaket und Spulendraht in der Polhornnut dient, in die Polhornnuten des zu bewickelnden Blechpakets eingelegt werden, wonach die Vorrichtung durch Verfahren oder Verschwenken der Gegenhalteeinrichtung gegenüber der Halteeinrichtung zur Ausbildung des Wickelspaltes in eine Arbeitsposition gebracht werden und das Isolierpapier fixieren kann.

Bevorzugt können die Klemmelemente als Klemmkrallen ausgestaltet sein, um eine feste und zuverlässige Fixierung zu ermöglichen. In einer weiter optimierten Ausgestaltung ist das zumindest eine zweite Klemmelement als Klemmschieber ausgestaltet. Das Spulenformgebungselement kann günstigerweise eine Nut zur Führung dieses zweiten Klemmelements aufweisen, worin das Klemmelement beim Zusammenfahren der Wickelvorrichtung zurückgezogen werden kann, um auf diese Weise das Isolierpapier zwischen der Wicklungsunterstützungsoberfläche und dem einen oder mehreren zweiten Klemmelementen an der dem Polhorn des Blechpakets zugewandten Seite der Polhornnut fest zu fixieren.

Mit der beschriebenen Vorrichtung wird so weitgehend vermieden, dass es zu Beschädigungen des Isolierpapiers kommen kann, was, wenn auch noch Verletzungen der Isolationsschicht des Spulendrahts durch scharfe Kanten des Blechpakets dazukommen, zu einem Ausfall oder einem Kurzschluss des Elektromotors führen könnte. Die Qualität und Lebensdauer des Elektromotors können damit optimiert werden.

Mittels einer so genannten Flyerwickeltechnik oder einer vergleichbaren Wickeltechnik kann anschließend ein Draht zur Ausbildung einer Magnetspule in den Wicklungsspalt eingewickelt werden. Durch die auf der Wicklungsunterstützungsoberfläche angeordneten ein oder mehreren Spulenformgebungselemente, beispielsweise Kanten, Nasen, Ausnehmungen im Bereich der Längskanten und Kopfenden von Polhörnern wird im Laufe des Einwicklungsvorgangs des Spulendrahts an solchen kritischen Stellen, an denen die Magnetspule aus den Polhornnuten herausragt, eine Formbeeinflussung des Spulenquerschnitts ermöglicht, die eine optimale Anpassung der Magnetspule an das Blechpaket und an einen Magnetfeld-optimierten Spulenquerschnitt gewährleistet. Durch das direkte Bewickeln entfällt das Herausnehmen, Einhebeln und Ausformen der Magnetspule, wobei die Eigenstabilität der Magnetspule erhöht und die Fertigungstaktzeit verkürzt werden kann. Durch das direkte Bewickeln können Beschädigungen des Isolierpapiers oder der Spulendrahtisolierung vermieden werden. Somit können optimal geformte Magnetspulen erreicht und somit bei gleicher Baugröße magnetisch optimierte Statoren und elektrisch effizientere Elektrowerkzeugmaschinen bereitgestellt werden.

Entsprechend einer vorteilhaften Ausgestaltung der Erfindung kann an der Halteeinrichtung ein Führungselement vorgesehen sein, sodass die eine oder mehreren erste Klemmelemente der Halteeinrichtung beim Schließen der einen oder mehreren ersten Klemmelemente zur Fixierung des Isolierpapiers an der dem Polhorn des Blechpakets zugewandten Seite der Polhornnut senkrecht zur Oberfläche des Isolierpapiers bewegbar sind. Dadurch kann gewährleistet werden, dass das Isolierpapier optimal fixiert werden kann, ohne dass das Isolierpapier bei eventuellem schrägen Aufsetzen der beispielsweise als Klemmkrallen ausgeführten ersten Klemmelemente durch Einwirkung von lateralen Kräften verschoben oder gar beschädigt werden kann. Dies kann wesentlich zu einer qualitätsmäßig optimierten Fertigung von Elektromotoren beitragen.

Vorteilhafterweise kann das Isolierpapier an der dem Polhorn des Blechpakets zugewandten Seite der Polhornnut über ein Schließen des Spalts zwischen der Wicklungsunterstützungsoberfläche und den einen oder mehreren zweiten Klemmelementen durch Zurückziehen des einen oder mehreren zweiten Klemmelements in abgewandter Richtung des Blechpakets fixiert werden. Auf diese Weise kann das Isolierpapier ohne größere Krafteinwirkung bei offenem Spalt in diesen eingeschoben werden, was sogar automatisiert erfolgen kann. Wenn das Isolierpapier dann in der richtigen Position liegt, kann dann durch Zurückziehen der beispielsweise als Klemmschieber ausgestalteten zweiten Klemmelemente der Spalt sukzessive geschlossen werden und das Papier langsam festgeklemmt werden, ohne dass eine Gefahr von Verrutschen oder Beschädigen des lsolierpapiers dabei entsteht. Nach dem endgültigen Schließen des Spaltes ist auf dieses Weise das Isolierpapier mit einer entsprechend großen Kraft fixiert und kann beim gesamten Bewicklungsvorgang sich nicht mehr bewegen.

In einer günstigen Ausgestaltung der Erfindung kann dieses Zurückziehen des einen oder mehreren zweiten Klemmelements zur Fixierung des Isolierpapiers durch ein Zusammenfahren von Halteeinrichtung und Gegenhalteeinrichtung vorgesehen sein. Diese Koordination der Bewegungen von Halte- und Gegenhalteeinrichtungen sowie der Klemmelemente bietet die Voraussetzung für eine möglichst zeitlich und kostenmäßig effektive Realisierung eines automatisierten Fertigungsprozesses des gesamten Bewicklungsvorgangs des Blechpakets.

In einer weiteren vorteilhaften Ausgestaltung der Erfindung kann die Vorrichtung eine Heizeinrichtung zum Verbacken von Magnetspule und/oder Blechpaket aufweisen. Zum Fixieren der Magnetspule nach dem Bewicklungsvorgang kann so günstigerweise ein Verbackungsprozess eingesetzt werden. Üblicherweise erfolgt dazu der Bewicklungsprozess mit bereits vorbeschichtetem Spulendraht, sodass ein Verbacken zweckmäßigerweise über entsprechendes Aufheizen erfolgen kann. Besonders vorteilhaft ist es deshalb, eine Heizeinrichtung in Kombination mit der Wickelvorrichtung vorzusehen, sodass der gesamte Verbackungsprozess in situ erfolgen kann und das bewickelte Blechpaket nicht in eine andere Einrichtung zum Verbacken transportiert werden muß, wobei wieder Gefahr von mechanischer Deformation bis zur Beschädigung der Blechpakete und/oder Magnetspulen besteht.

In einem nebengeordneten Aspekt schlägt die Erfindung ein Verfahren zur Bewicklung eines Blechpakets mit einer Magnetspule vor, bei dem ein leitfähiger, isolierter Spulendraht in eine oder mehrere Polhornnuten einer Wicklungsoberfläche des Blechpakets eingewickelt wird, wobei das mit einem Isolierpapier ersehenes Blechpaket in eine zuvor beschriebene, erfindungsgemäße Vorrichtung eingelegt wird. Die Erfindung sieht weiter vor, dass das Isolierpapier durch zumindest ein erstes Klemmelement einer Halteeinrichtung der Vorrichtung und durch zumindest ein zweites Klemmelement einer Gegenhalteeinrichtung der Vorrichtung an einer Polhornnut fixiert wird. Vorteilhafterweise kann auf diese Weise eine sehr feste Fixierung während des gesamten Bewicklungsvorgangs erreicht werden und zugleich eine weitgehend automatisierte Fertigung mit optimalen Taktzeiten ermöglicht werden. Auch sind mögliche Beschädigungen des Isolierpapiers vor der Montage zu einem Stator und Assemblierung in einen Elektromotor weitgehend ausgeschlossen.

Während des Wicklungsvorgangs kann zumindest ein Spulenformgebungselement der Wicklungsunterstützungsoberfläche die Wickellage des Spulendrahts bzw. die Form eines aus einer Nut ragenden Teilbereichs der Spule beeinflussen. Somit wird das direkte Bewickeln eines Blechpakets eines Stators oder Läufers vorgeschlagen, bei dem ein oder mehrere Spulenformgebungselemente auf einer Wicklungsunterstützungsoberfläche einer Gegenhalteeinrichtung die Wickellage des Spulendrahts beeinflussen, so dass eine magnetisch und mechanisch optimierte Spulenform erreicht werden kann.

Gemäß einer vorteilhaften Weiterentwicklung des Verfahrens kann nach Abschluss des Wicklungsvorgangs ein Verbacken der Spule erfolgen, insbesondere ein vollständiges Verbacken. Nach dem Öffnen der Wicklungsvorrichtung besteht die Gefahr, dass sich der Draht aus dem Blechpaket löst, da keine Vorspannung mehr vorhanden ist. Durch ein Verbacken, insbesondere ein vollständiges Verbacken, kann die Spule auf dem Polschuh fixiert werden, so dass ein Verschieben der einzelnen Spulendrähte oder der Wickellage verhindert werden. Dabei ist angestrebt, den Verbackungsgrad so hoch wie möglich zu halten, insbesondere vollständig zu verbacken so dass ein erneutes Aufheizen des Blechpakets nicht mehr notwendig wird. Hierzu kann die Wicklungsvorrichtung eine Heizvorrichtung zum Erwärmen des Blechpakets umfassen, so dass zumindest ein teilweises Verbacken der Spule erreicht werden kann. Der Verbackungsprozess kann bereits während des Wickelvorgangs erfolgen. So sieht ein Fertigungskonzept vor, dass die Spule nur teilweise verbacken wird, um die Fixierung für weitere Bearbeitungsschritte zu gewährleisten. Ein alternatives Konzept sieht vor, die Halteeinrichtung komplett aus der Bewicklungsvorrichtung auszuschleusen und in der Halteeinrichtung das vollständige Verbacken durchzuführen. Des Weiteren kann im Folgeprozess die Spule vollständig beschichtet werde. Dadurch können aufwändige Verbackwerkzeuge eingespart werden, sowie der Platzbedarf der Produktionslinie wird reduziert. Durch das vorzeitige Komplettbeschichten ergibt sich des Weiteren der Vorteile einer verbesserten Isolation. Das Verbacken der Spule in der Wicklungsvorrichtung ist insbesondere aus dem Grund vorteilhaft, da beim Öffnen der Vorrichtung, d.h. dem Entfernen von Halte- und Gegenhalteeinrichtung ein Verlust der Vorspannung eintritt, und somit die Spule aufgehen würde. Da die Polschuhgeometrie bei Motoren für Elektrowerkzeuge oder anderen hochkompakten Motoren keine Fixierung der Spulen vorsehen, ist das Verbacken innerhalb der Vorrichtung zur Erhöhung der Qualität, Fertigungsgeschwindigkeit und Kostensenkung vorteilhaft.

Ganz besonders vorteilhaft erweist sich, dass die Bewicklungsvorrichtung nach der Erfindung mit einem einmaligen Aufheizen der Magnetspule mit Blechpaket zum Verbacken der Magnetspule in einem direkt nachgeschalteten Arbeitsgang zur Pulverbeschichtung der Teile benutzt werden kann. Das Erhitzen der Magnetspule kann beispielsweise durch Bestromen der Magnetspule erfolgen.

Die in einem ersten Prozessschritt erhitzte Spule kann aus der Vorrichtung entfernt und für einen zweiten Prozessschritt z.B. in ein Pulvertauchbad eingebracht werden. Ein einmaliges Aufheizen der Magnetspule ermöglicht daher eine Fertigung mit geringerem Investitionsbedarf, niedrigerem Energieverbrauch und geringerem Platzbedarf. Das einmalige Aufheizen ermöglicht darüber hinaus Linienkonzepte für die Fertigung, die wettbewerbsfähige Taktzeiten erreichen können.

In einem nebengeordneten Aspekt schlägt die Erfindung einen Elektromotor, insbesondere einen Reihen-, Neben- oder Doppelschluss-Wechselstrommotor vor, der einen Stator und/oder einen Läufer umfasst, der aus zumindest einem Blechpaket, insbesondere zwei oder mehrere Blechpakete zusammengesetzt ist. Die Blechpakete sind nach einem der vorgenannten Bewicklungsverfahren mit jeweils einer Magnetspule bewickelt, und der Elektromotor ist ausgelegt, um in einem Elektrowerkzeug, bevorzugt in einer handgeführten Elektrowerkzeugmaschine, wie einem Winkelschleifer, Bohrmaschine oder Bohrhammer, eingesetzt zu werden. Durch einen verbesserten Aufbau der gewickelten Magnetspule können elektrisch effiziente Elektromotoren vorgeschlagen werden, die bei geringerer Baugröße gleiche elektrische Leistung bringen und somit insbesondere bei handgeführten Elektrowerkzeugen zu einer Verkleinerung, Gewichtsersparnis und kompakteren Bauweise führen können.

Dementsprechend wird in einem weiteren erfinderischen Aspekt eine Elektrowerkzeugmaschine vorgeschlagen, die einen vorangehend beschriebenen Motor umfasst.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: in schematischer Darstellung ein Blechpaket mit Magnetspule nach einem ersten Ausführungsbeispiel der Erfindung;
- Fig. 2: perspektivisch eine vorteilhafte Wickelvorrichtung zur Aufbringung einer Magnetspule auf ein Blechpaket;
- Fig. 3: schematisch das Ausrichten von Halte- und Gegenhalteeinrichtung einer Wicklungsvorrichtung nach der Erfindung;
- Fig. 4: perspektivische Darstellung einer Halteeinrichtung mit eingelegtem Blechpaket nach einem Ausführungsbeispiel der Erfindung;
- Fig. 5: perspektivische Darstellung einer Gegenhalteeinrichtung mit geöffnetem zweiten Klemmelement nach einem Ausführungsbeispiel der Erfindung;
- Fig. 6: perspektivische Darstellung einer Gegenhalteeinrichtung mit angelegtem Blechpaket nach einem Ausführungsbeispiel der Erfindung;

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

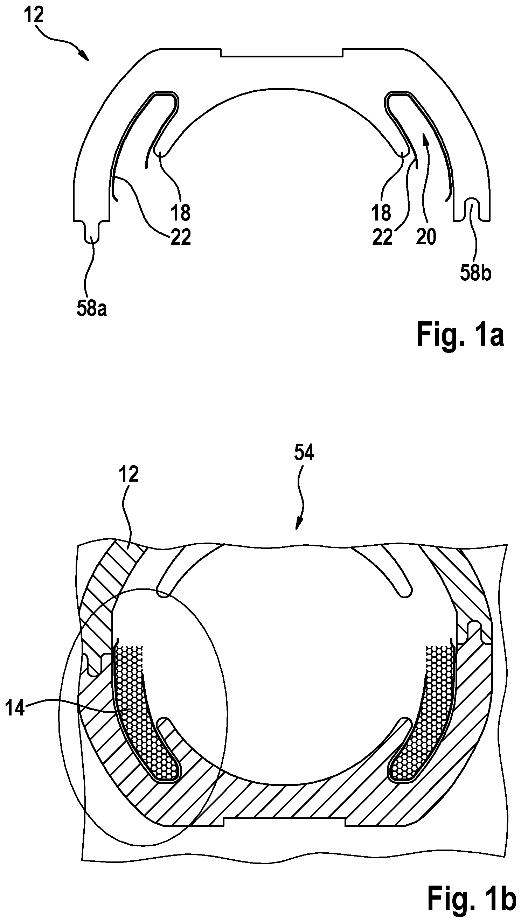

Figur 1a und 1b zeigen den Aufbau eines Stators aus zwei Blechpaketen 12, die über Verbindungselemente 58a, 58b in Form einer Nut-Feder-Verbindung miteinander formschlüssig verbunden werden können. Die beiden Statorhalbschalen 54 bestehen aus laminiertem Eisenblech, und weisen auf der Innenseite der Statoroberfläche Polhörner 18 auf, die mit der Innenoberfläche des Blechpakets 12 eine Polhornnut 20 ausbilden, in die Spulendrähte einer Magnetspule 14 eingelegt werden können. Hierbei definiert die Innenseite der Polhornnut 20 zusammen mit einer hierüber hinausgehenden Innenoberfläche des Blechpakets 12 eine Wicklungsoberfläche 22, an der sich die zu wickelnde Magnetspule 14 gegenüber dem Blechpaket 12 abstützt. Figur 1a stellt den Querschnitt durch ein Blechpaket 12 einer Statorhalbschale 54 eines Stators nach einem ersten Ausführungsbeispiel der Erfindung dar. In Figur 1b ist ein Querschnitt durch eine Statorhalbschale 54 dargestellt, die ein Blechpaket 12 umfasst, in der Polhornnuten 20 durch ein Polhorn 18 definiert sind, wobei ein Spulendraht 16 zur Ausbildung einer Magnetspule 14 in die Polhornnut 20 eingewickelt ist, hergestellt mittels einer Ausführungsform einer erfindungsgemäßen Vorrichtung.

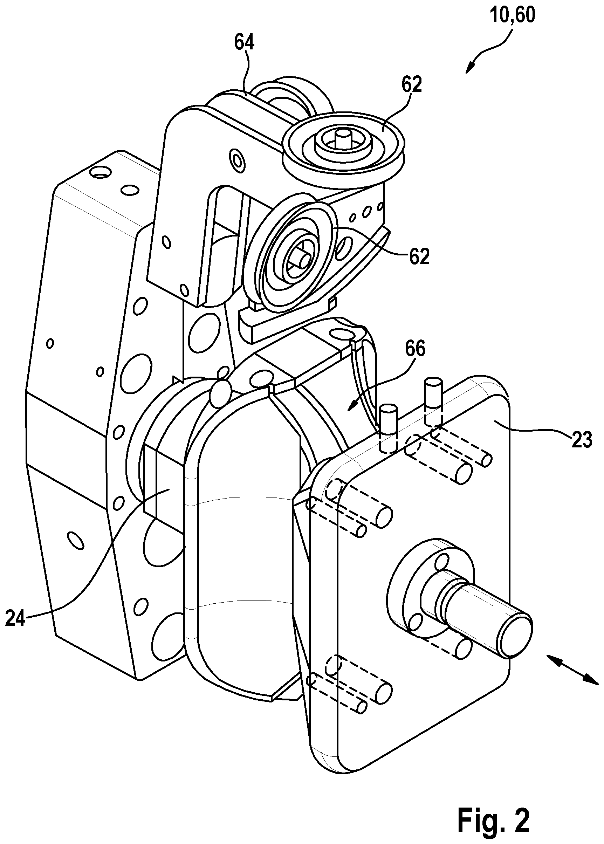

In der Figur 2 ist in einer perspektivischen dreidimensionalen Ansicht eine Bewicklungsvorrichtung 10 als Flyerwickelvorrichtung 60 dargestellt. Die Flyerwickelvorrichtung 60 umfasst eine Halteeinrichtung 23, auf der ein Blechpaket 12, beispielsweise eine Statorhalbschale angeordnet werden kann. Des Weiteren ist eine Gegenhalteeinrichtung 24 vorgesehen, die eine Wicklungsunterstützungsoberfläche 26 aufweist, die im Wesentlichen formkomplementär zur Innenoberfläche des Blechpakets 12 der Statorhalbschale 54 ausgeformt ist. Die Wicklungsunterstützungsoberfläche 26 weist Spulenformgebungselemente in Form von Formgebungsnuten auf, die eine definierte Verteilung der Wickellage eines Spulendrahts im Laufe des Wicklungsvorgangs ermöglichen. Dieser Spulendraht wird über Drahtführungsräder 62 zugeführt, die in Lage und Wickelgeschwindigkeit mittels eines Flyerwickelarms 64 um Nuten des Blechpakets gewickelt werden können. Hierzu kann das System aus Halte- und Gegenhalteeinrichtung 23, 24 relativ zueinander gedreht werden, um ein Aufwickeln des Drahtes auf dem Blechpaket 12 zu ermöglichen. Alternativ kann der Flyerwickelarm 64 gegenüber dem fest stehenden Blechpaket 12 verdreht werden.

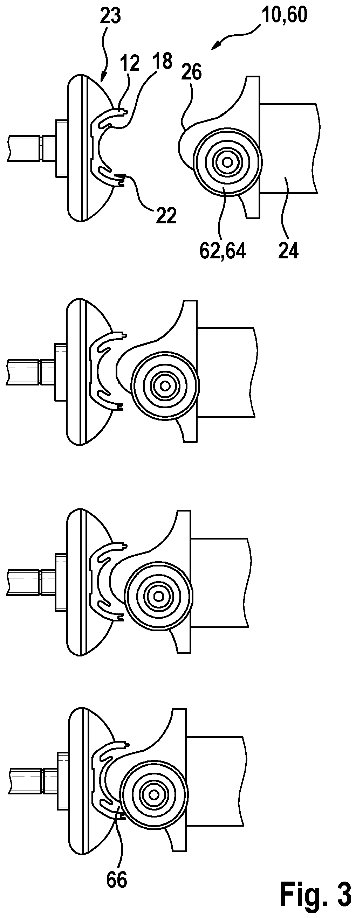

In Figur 3 ist ein räumliches Zusammenfahren einer Halteeinrichtung 23 einer Flyerwickelvorrichtung 60 und einer Gegenhalteeinrichtung 24 dargestellt, wodurch der aus der Polnut herausragende Bereich der Wicklungsoberfläche 22 eines Blechpakets 12 gegen eine Wicklungsunterstützungsoberfläche 26 einer Gegenhalteeinrichtung 24 verfahren werden kann. Das Blechpaket 12 wird hierbei vor Zusammenfahren der beiden Einrichtungen in die Halteeinrichtung 23 eingelegt, wobei erste Klemmelemente 70 zugefahren werden und damit das in das Blechpaket 12 bereits eingelegte Isolierpapier 50 an der dem Polhorn 18 abgewandten Seite der Polhornnut 20 festklemmen können. Durch das Zusammenfahren von Halteeinrichtung 23 und Gegenhalteeinrichtung 24 kann dann auch ein Zurückziehen des einen oder mehreren zweiten Klemmelements 72 zur Fixierung des Isolierpapiers 50 bewirkt werden.

Nach Ausbildung eines genügend engen Wickelspalts 66 kann ein Spulendraht über Drahtführungsräder 62 des Flyerwickelarms 64 in den durch die Polhornnut 20 des Blechpakets 12 sowie in den Spalt zwischen Wicklungsunterstützungsoberfläche 26 und dem aus der Polhornnut 20 herausragenden Innenflächenbereich des Blechpakets 12 definierten Wicklungsspalt 66 eingewickelt werden. Bei einer allmählichen Verdickung der Magnetspule kann der Abstand zwischen Halteeinrichtung 23 und Gegenhalteeinrichtung 24 vergrößert werden, und somit eine verbesserte Ausfüllung der Drahtanordnung innerhalb des Spulenquerschnitts erreicht werden. Der Spulendraht wird über Drahtführungsräder 62 aus einem Spulendrahtreservoir eingeführt, wobei die Drahtspannung und die Einführwinkel in dem Wickelspalt 66 variierbar sind.

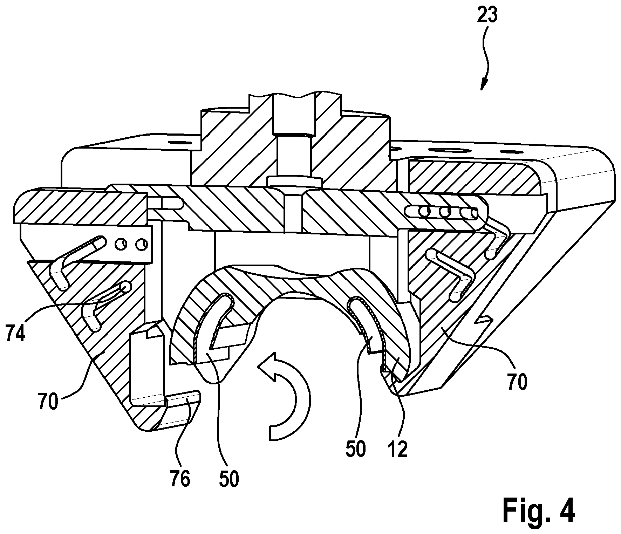

Figur 4 zeigt eine perspektivische Darstellung einer Halteeinrichtung 23 mit eingelegtem Blechpaket 12 nach einem Ausführungsbeispiel der Erfindung. Das bereits mit Isolierpapier 50 versehene Blechpaket 12 ist bereits in die Halteeinrichtung 23 eingelegt. Danach können erste Klemmelemente 70, die in dem gezeigten Beispiel als Klemmkrallen ausgebildet sind, über mindestens ein Führungselement 74, das in dem gezeigten Beispiel als Führungsnut ausgebildet ist, geschlossen werden und zwar dergestalt, dass die Klemmelemente 70 über diese Führungsnut in einer als Pfeil in der Zeichnung dargestellten Bewegung zugefahren werden, sodass die Klemmbacken 78 des Klemmelements 70 in der Endphase der Bewegung senkrecht auf die Oberfläche des Isolierpapiers treffen. Auf der linken Seite der Halteeinrichtung 23 ist das Klemmelement 70 in offenem Zustand, auf der rechten Seite in geschlossenem Zustand dargestellt.

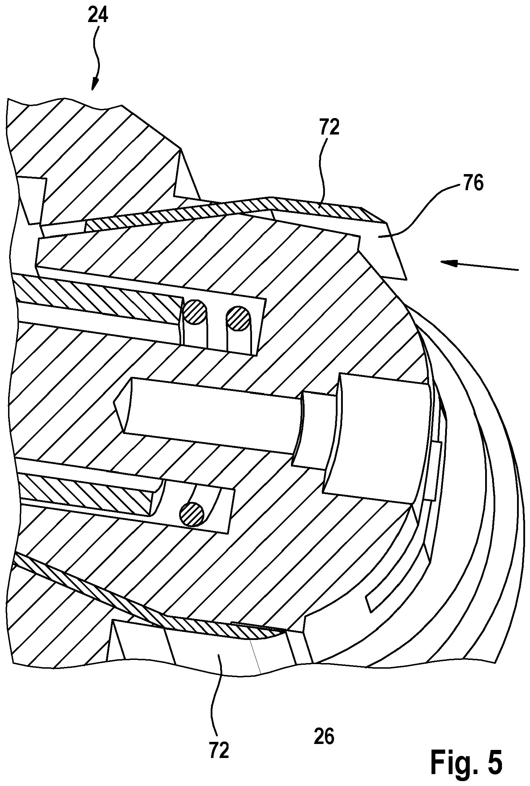

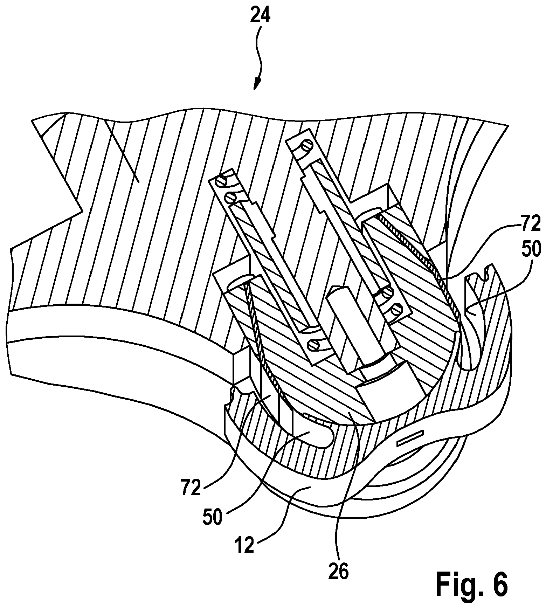

In Figur 5 ist eine perspektivische Darstellung einer Gegenhalteeinrichtung 24 mit geöffnetem zweiten Klemmelement 72 nach einem Ausführungsbeispiel der Erfindung gezeigt. Die Figur 5 zeigt dabei eine Wicklungsunterstützungsoberfläche 26 der Gegenhalteeinrichtung 24 als Ausschnitt mit in diesem Beispiel zwei zweiten Klemmelementen 72, die hier als Klemmschieber ausgebildet sind. Im oberen Teil der Figur 5 ist das Klemmelement 72 in ausgefahrenem Zustand gezeigt, sodass ein Spalt 76 zwischen der Wicklungsunterstützungsoberfläche 26 und dem Klemmelement 72 entsteht, in den beim Zusammenfahren von Halteeinrichtung 23 und Gegenhalteeinrichtung 24 das in das Blechpaket 12 eingelegte Isolierpapier 50 geschoben werden kann. Die Einschubrichtung des Isolierpapiers 50 ist in der Zeichnung mit dem Pfeil dargestellt. Im unteren Teil der Figur 5 ist das Klemmelement 72 in zurückgefahrenem Zustand dargestellt, in dem der Spalt 76 geschlossen und damit das Isolierpapier 50 festgeklemmt ist. Der geschlossenen Zustand ist in der folgenden Figur 6 mit eingeklemmtem Isolierpapier zu sehen.

Figur 6 zeigt eine perspektivische Darstellung einer Gegenhalteeinrichtung 24 mit angelegtem Blechpaket 12 nach einem Ausführungsbeispiel der Erfindung. Das Blechpaket 12 ist bereits mit Isolierpapier 50 versehen. In der Zeichnung ist die Gegenhalteeinrichtung 24 mit geschlossenen zweiten Klemmelementen 72, die in dem gezeigten Beispiel als Klemmschieber ausgebildet sind, dargestellt. In diesem Zustand sind die Klemmelemente 72 zurückgefahren, haben dadurch den Spalt 76 zwischen der Wicklungsunterstützungsoberfläche 26 und den einen oder mehreren zweiten Klemmelementen 72 durch Zurückziehen des einen oder mehreren zweiten Klemmelements 72 in abgewandter Richtung des Blechpakets 12 geschlossen, sodass das Isolierpapier 50 fest zwischen Klemmelement 72 und Wicklungsunterstützungsoberfläche 26 fixiert ist. Die Halteeinrichtung 23, die das Blechpaket 12 eigentlich erst an die Gegenhalteeinrichtung 24 beim Zusammenfahren der beiden Einrichtungen anlegt, ist zur besseren Sichtbarkeit des Blechpakets in der Zeichnung weggelassen.

Mittels der neuen Wicklungsvorrichtung und des neuen Wicklungsverfahrens kann eine deutliche Verbesserung des Magnetspulenaufbaus für Elektromotoren sowie der Verdichtung der Spulendrähte erreicht werden. Durch ein "Vorbacken" des Spulendrahts kann eine Fixierung bereits während und/oder nach dem Wicklungsvorgang der Magnetspule erreicht werden. Form und Geometrie der Polhörner und des Polhornnutenverlaufs können für eine optimale Verdichtung der Spulendrähte und gesteuerten Querschnittsgestaltung der Magnetspule angepasst werden. Während des Wicklungsvorgangs kann bereits ein Verbacken der verlegten Drähte erfolgen. Hierdurch ist es möglich, bei gleicher Baugröße leistungsfähigere Statoren bzw. Läufer und damit leistungsfähigere, weniger fehleranfällige und langlebigere Motoren, insbesondere für den Betrieb in einer Elektrowerkzeugmaschine, bereitzustellen.

## Patentansprüche

1. Vorrichtung (10) zur Bewicklung eines Blechpakets (12) mit einer Magnetspule (14) für einen Elektromotor, bei der ein leitfähiger, isolierter Spulendraht in eine oder mehrere Polhornnuten (20) einer Wicklungsoberfläche (22) des Blechpakets (12) einwickelbar ist, umfassend eine Halteeinrichtung (23) zur Fixierung des zu bewickelnden Blechpakets (12) während des Wickelvorgangs und eine Gegenhalteeinrichtung (24), wobei, an der Halteeinrichtung (23) an einer einem Polhorn (18) des Bleckpakets (12) abgewandten Seite einer Pothornnut (20) zumindest ein erstes Klemmelement (70) und an der Gegenhalteeinrichtung (24) an einer dem Poihorn (18) des Bleckpakets (12) zugewandten Seite der Polhornnut (20) zumindest ein zweites Klemmelement (72) zur Fixierung eines Isolierpapiers (50) an der Polhornnut (20) vorgesehen ist.

2. Vorrichtung nach Anspruch 1, **dadurch gekennzeichnet, dass** zumindest eine Wicklungsunterstützungsoberfläche (26) der Gegenhalteeinrichtung (24) vorgesehen ist, die relativ zu dem aus der Polhornnut (20) herausragenden Bereich der Wicklungsoberfläche (22) des Biechpakets (12) verfahr- oder verschwenkbar ist, und die Wicklungsunterstützungsoberfläche (26) zumindest ein Spulenformgebungselement (28) aufweist, wodurch die Wickellage (32) des Spulendrahts bzw ein aus der Polhornnut (20) ragender Teilbereich der Magnetspule (14) während des Wicklungsvorgangs vorgebbar ist und das Spulenformgebungselement (28) eine Nut zur Führung des zumindest einen zweiten Klemmelements (72) zur Fixierung des Isolierpapiers zwischen der Wicklungsunterstützungsoberfläche (26) und dem zumindest einen zweiten Klemmelement (72) an der dem Polhorn (18) des Blechpakets (12) zugewandten Seite der Polhornnut (20) zur Aufnahme des Isolierpapiers (50) aufweist.

3. Vorrichtung nach einem der vorhergehenden Ansprüche, **dadurch gekennzeichnet, dass** ein Führungselement (74) an der Halteeinrichtung (23) vorgesehen ist, sodass das zumindest eine erste Klemmelement (70) der Halteeinrichtung (23) beim Schließen des zumindest einen ersten Klemmelements (70) zur Fixierung des Isolierpapiers (50) an der dem Polhorn (18) des Blechpakets (12) zugewandten Seite der Polhornnut (20) senkrecht zur Oberfläche des Isolierpapiers (50) bewegbar ist.

4. Vorrichtung nach einem der Ansprüche 2 oder 3, **dadurch gekennzeichnet, dass** das Isolierpapier (50) an der dem Polhorn (18) des Blechpakets (12) zugewandten Seite der Polhornnut (20) über ein Schließen eines Spalts (76) zwischen der Wicklungsunterstützungsoberfläche (26) und dem zumindest einen zweiten Klemmelement (72) durch Zurückziehen des zumindest einen zweiten Klemmelements (72) in abgewandter Richtung des Blechpakets (12) fixierbar ist.

5. Vorrichtung nach einem der vorhergehenden Ansprüche, **dadurch gekennzeichnet, dass** ein Zurückziehen des zumindest einen zweiten Klemmelements (72) zur Fixierung des Isolierpapiers (50) durch ein Zusammenfahren von Halteeinrichtung (23) und Gegenhalteeinrichtung (24) bewirkbar ist.

6. Vorrichtung nach einem der vorhergehenden Ansprüche, **dadurch gekennzeichnet, dass** die Vorrichtung (10) zum Verbacken von Magnetspule (14) und/oder Blechpaket (12) eine Heizeinrichtung aufweist.

7. Verfahren zur Bewicklung eines Blechpakets (12) mit einer Magnetspule (14), bei dem ein leitfähiger, isolierter Spulendraht in eine oder mehrere Polhornnuten (20) einer Wicklungsoberfläche (22) des Blechpakets (12) eingewickelt wird, wobei das mit einem Isolierpapier (50) versehenes Blechpaket (12) in eine Vorrichtung (10) nach einem der vorhergehenden Ansprüche eingelegt wird, **dadurch gekennzeichnet, dass** das Isolierpapier (50) durch zumindest ein erstes Klemmelement (70) einer Halteeinrichtung (23) der Vorrichtung (10) und durch zumindest ein zweites Klemmelement (72) einer Gegenhalteeinrichtung (24) der Vorrichtung (10) an einer Polhornnut (20) fixiert wird.

8. Verfahren nach Anspruch 7, **dadurch gekennzeichnet, dass** nach Abschluss des Wickelvorgangs in der Vorrichtung (10) ein Verbacken der Magnetspule (14) und/oder des Blechpakets (12), insbesondere ein teilweises Verbacken, erfolgt,

9. Verfahren nach Anspruch 8, **dadurch gekennzeichnet, dass** nach dem Verbacken in der Vorrichtung (10) eine Pulverbeschichtung der Magnetspule (14) und/oder des Blechpakets (12) erfolgt.

10. Elektromotor, insbesondere Reihen-, Neben- oder Doppelschluss-Wechselstrommotor, umfassend einen Stator (38) und/oder einen Läufer zusammengesetzt aus zumindest einem Blechpaket (12), insbesondere zwei oder mehreren Blechpaketen (12), die nach einem der vorhergehenden Ansprüche 7 bis 9 bewickelt sind, zur Verwendung in einem Elektrowerkzeug, bevorzugt in einer handgeführten Elektrowerkzeugmaschine, wie Winkelschleifer, Bohrmaschine oder Bohrhammer.

11. Elektrowerkzeugmaschine umfassend einen Elektromotor nach Anspruch 10.

## Claims

1. Apparatus (10) for the purpose of winding a laminated core (12) with a magnet coil (14) for an electric motor, in which apparatus a conductive, insulated coil wire can be wound into one or multiple pole tip grooves (20) of a winding surface (22) of the laminated core (12), said apparatus comprising a holding device (23) for the purpose of fixing the laminated core (12) that is to be wound during the winding process and a counter holding device (24), wherein at least one first clamping element (70) is provided on the holding device (23), on a face of a pole tip groove (20) that is remote from a pole tip (18) of the laminated core (12), and at least one second clamping element (72) is provided on the counter holding device (24), on a face of the pole tip groove (20) that is facing the pole tip (18) of the laminated core (12), for the purpose of fixing an insulating paper (50) to the pole tip groove (20) .

2. Apparatus according to Claim 1, **characterized in that** at least one winding support surface (26) of the counter holding device (24) is provided and said winding support surface can be displaced or pivoted relative to the region of the winding surface (22) of the laminated core (12), said region protruding out of the pole tip (20), and the winding support surface (26) comprises at least one coil-shaping element (28), whereby the winding position (32) of the coil wire or rather a part region of the magnet coil (14) that protrudes out of the pole tip groove (20) can be predefined during the winding process and the coil shaping element (28) comprises a groove for the purpose of guiding the at least one second clamping element (72) for the purpose of fixing the insulating paper between the winding support surface (26) and the at least one second clamping element (72) on the face of the pole tip groove (20), said face facing the pole tip (18) of the laminated core (12), for the purpose of receiving the insulating paper (50).

3. Apparatus according to either one of the preceding claims, **characterized in that** a guiding element (74) is provided on the holding device (23) so that the at least one first clamping element (70) of the holding device (23) can be moved perpendicular to the surface of the insulating paper (50) during the process of closing the at least one first clamping element (70) for the purpose of fixing the insulating paper (50) to the face of the pole tip groove (20), said face facing the pole tip (18) of the laminated core (12).

4. Apparatus according to either one of Claims 2 and 3, **characterized in that** the insulating paper (50) can be fixed to the face of the pole tip groove (20), said face facing the pole tip (18) of the laminated core (12), by way of closing a gap (76) between the winding support surface (26) and the at least one second clamping element (72) by virtue of pulling back the at least one second clamping element (72) in the direction that is remote from the laminated core (12).

5. Apparatus according to any one of the preceding claims, **characterized in that** a process of pulling back the at least one second clamping element (72) for the purpose of fixing the insulating paper (50) can be implemented by virtue of bringing together the holding device (23) and the counter holding device (24).

6. Apparatus according to any one of the preceding claims, **characterized in that** the apparatus (10) comprises a heating device for baking the magnet coil (14) and/or the laminated core (12).

7. Method for winding a laminated core (12) with a magnet coil (14), in which method a conductive, insulated coil wire is wound into one or multiple pole tip grooves (20) of a winding surface (22) of the laminated core (12), wherein the laminated core (12) that is provided with an insulating paper (50) is inserted into an apparatus (10) according to any one of the preceding claims, **characterized in that** the insulating paper (50) is fixed to a pole tip groove (20) by means of at least one first clamping element (70) of a holding device (23) of the apparatus (10) and by means of at least one second clamping element (72) of a counter holding device (24) of the apparatus (10).

8. Method according to Claim 7, **characterized in that** after concluding the winding process in the apparatus (10), a process of baking the magnet coil (14) and/or the laminated core (12), in particular partially baking, said magnet coil and said laminated core is performed.

9. Method according to Claim 8, **characterized in that** after the baking process in the apparatus (10), a powder coating process of the magnet coil (14) and/or the laminated core (12) is performed.

10. Electric motor, in particular series motor, shunt-wound motor or compound-alternating current motor, comprising a stator (38) and/or an armature assembled from at least one laminated core (12), in particular two or multiple laminated cores (12), that are wound according to any one of the preceding Claims 7 to 9, for application in an electric tool, preferably in a hand-operated electric tool machine, such as an angle grinder, drill or drill hammer.

11. Electric tool machine comprising an electric motor according to Claim 10.

## Revendications

1. Dispositif (10) pour enrouler une bobine magnétique (14) autour d'un paquet de tôles (12) de moteur électrique, dans lequel un fil de bobine conducteur isolé peut être enroulé dans une ou plusieurs rainures polaires (20) d'une surface d'enroulement (22) du paquet de tôles (12), comprenant un système de support (23) permettant de fixer le paquet de tôles (12) destiné à recevoir un enroulement au cours du processus d'enroulement, et un système de support complémentaire (24), dans lequel au moins un premier élément de blocage (70) est prévu sur le système de support (23) sur un côté d'une rainure (20) d'une corne polaire qui est tourné à l'opposé d'une corne polaire (18) du paquet de tôles (12) et au moins un second élément de blocage (72) est prévu sur le système de support complémentaire (24) sur un côté de la rainure de la corne polaire (20) qui est tournée vers la corne polaire (18) du paquet de tôles (12) pour fixer un papier isolant (50) sur la rainure de corne polaire (20).

2. Dispositif selon la revendication 1, **caractérisé en ce qu'**il est prévu au moins une surface de support d'enroulement (26) du système de support complémentaire (24), qui peut être déplacée ou amenée à pivoter par rapport à la zone de la surface d'enroulement (22) du paquet de tôles (12) qui dépasse de la rainure polaire (20), et la surface de support d'enroulement (26) comporte au moins un élément de conformation de bobine (28), de sorte que la couche d'enroulement (32) du fil de bobine ou une zone partielle de la bobine magnétique (14) dépassant de la rainure polaire (20) peut être prédéterminée au cours du processus d'enroulement, et l'élément de conformation de bobine (28) comporte une rainure permettant de guider ledit au moins un second élément de blocage (72) afin de fixer le papier isolant entre la surface de support d'enroulement (26) et ledit au moins un second élément de blocage (72) sur le côté de la rainure (20) qui est tourné vers la corne polaire (18) du paquet de tôles (12) afin de recevoir le papier isolant (50).

3. Dispositif selon l'une des revendications précédentes, **caractérisé en ce qu'**il est prévu sur le système de support (23) un élément de guidage (74) de manière à ce que ledit au moins un premier élément de blocage (70) du système de support (23) puisse être déplacé perpendiculairement à la surface du papier isolant (50) lorsque ledit au moins un premier élément de blocage (70) est fermé du côté de la rainure polaire (20) qui est tourné vers la corne polaire (18) du paquet de tôles (12) afin de fixer le papier isolant (50).

4. Dispositif selon l'une des revendications 2 ou 3, **caractérisé en ce que** le papier isolant (50) peut être fixé sur le côté de la rainure de la corne polaire (20) qui est tourné vers la corne polaire (18) du paquet de tôles (12) par l'intermédiaire d'une fermeture d'un interstice (76) entre la surface de support d'enroulement (26) et ledit au moins un second élément de blocage (72) par rétraction dudit au moins un second élément de blocage (72) dans le sens opposé au paquet de tôles (12).

5. Dispositif selon l'une des revendications précédentes, **caractérisé en ce qu'**une rétraction dudit au moins un second élément de blocage (72) peut être provoquée pour fixer le papier isolant (50) en déplaçant ensemble le système de support (23) et le système de support complémentaire (24).

6. Dispositif selon l'une des revendications précédentes, **caractérisé en ce que** le dispositif (10) est pourvu d'un système de chauffage pour la cuisson de la bobine magnétique (14) et/ou du paquet de tôles (12).

7. Procédé pour enrouler une bobine magnétique (14) autour d'un paquet de tôles (12), dans lequel un fil de bobine conducteur isolé est enroulé dans une ou plusieurs rainures polaires (20) d'une surface d'enroulement (22) du paquet de tôles (12), dans lequel le paquet de tôles (12) pourvu d'un papier isolant (50) est inséré dans un dispositif (10) selon l'une des revendications précédentes, **caractérisé en ce que** le papier isolant (50) est fixé à une rainure de corne polaire (20) par au moins un premier élément de blocage (70) d'un système de support (23) du dispositif (10) et par au moins un second élément de blocage (72) d'un système de support complémentaire (24) du dispositif (10).

8. Procédé selon la revendication 7, **caractérisé en ce qu'**après l'achèvement du processus d'enroulement dans le dispositif (10), une cuisson de la bobine magnétique (14) et/ou du paquet de tôles (12), en particulier une cuisson partielle, est effectuée.

9. Procédé selon la revendication 8, **caractérisé en ce que**, après la cuisson dans l'appareil (10), un revêtement de poudre de la bobine magnétique (14) et/ou du paquet de tôles (12) est effectué.

10. Moteur électrique, en particulier moteur à courant alternatif en ligne, auxiliaire ou à deux pôles, comprenant un stator (38) et/ou un rotor composé d'au moins un paquet de tôles (12), en particulier deux paquets de tôles (12) ou plus, sur lesquels un enroulement selon l'une des revendications 7 à 9 précédentes est effectué, pour utilisation dans une machine électrique, de préférence dans un outil électrique guidé manuellement tel qu'une meuleuse d'angle, une perceuse ou une marteau perforateur.

11. Machine-outil électrique comprenant un moteur électrique selon la revendication 10.
